# EUROPEAN PATENT SPECIFICATION

(11) **EP 3 822 209 B1**
(45) Date of publication and mention of the grant of the patent: **06.05.2026**
(21) Application number: 20206972.0
(22) Date of filing: 11.11.2020
(51) Int. Cl.: B66B 1/34, B66B 5/00

(54) **ELEVATOR SYSTEM WITH MESH NETWORK HAVING PROXY-TRANSCEIVER**
AUFZUGSSYSTEM MIT MESH-NETZWERK MIT PROXY-SENDER-EMPFÄNGER
SYSTÈME D'ASCENSEUR DOTÉ D'UN RÉSEAU MAILLÉ AVEC ÉMETTEUR-RÉCEPTEUR PROXY

(30) Priority: 18.11.2019 US 201962937210 P
(43) Date of publication of application: 19.05.2021
(73) Proprietor: Honeywell International Inc., Charlotte, NC 28202 (US)
(72) Inventor: KUENZI, Adam, Salem, OR 97302-1142 (US); KLOPFENSTEIN, Troy, Salem, OR 97302-1142 (US)
(74) Representative: Dehns

(56) References cited:
- EP-A2- 1 103 510
- WO-A1-2010/012639
- US-A1- 2015 251 875
- US-A1- 2019 210 837
- FAVRAUD ROMAIN ET AL: "Self-backhauled autonomous LTE mesh networks", 2017 IEEE 13TH INTERNATIONAL CONFERENCE ON WIRELESS AND MOBILE COMPUTING, NETWORKING AND COMMUNICATIONS (WIMOB), IEEE, 9 October 2017 (2017-10-09), pages 1 - 8, XP033261361, [retrieved on 20171120], DOI: 10.1109/WIMOB.2017.8115763
- JAMES JERIN M ET AL: "Design of heterogeneous wireless mesh network for LTE", 2017 INTERNATIONAL CONFERENCE ON CIRCUIT ,POWER AND COMPUTING TECHNOLOGIES (ICCPCT), IEEE, 20 April 2017 (2017-04-20), pages 1 - 5, XP033229063, [retrieved on 20171018], DOI: 10.1109/ICCPCT.2017.8074351

## Description

The embodiments herein relate to a method and system for connecting a first device that is configured for moving to a non-moving network. For instance, a non-limiting example may relate to elevator systems and more specifically to an elevator system with a mesh network having a proxy-transceiver.

In a hotel, a guest may access a card reader with a prior encoded guest card and the reader may determine on the spot if access can be granted. A reader may be mounted as a door lock on a guest door, mounted near an access-controlled entrance, or mounted as a lift reader inside an elevator for controlling access control to floors. There are times where access control parameters for the guest need to be adjusted and the reader requires a configuration update. For example, if a guest is moved from one room to another, the lift reader may need to know to allow that guest to a different floor. If a guest were to have their stay extended, the lift reader may need to know to allow this guest to access the lift for an extended time period. Also, there may be a need to upgrade the programming in the reader, upgrade firmware remotely, etc. These maintenance operations may require the ability to remotely communicate with the reader. The maintenance of the reader becomes an issue in a system where the lift reader has no ability to communicate with the access control system. Additionally, adding a radio transmitter such as Bluetooth will help, but does not address connectivity issues. Since the reader moves around with the elevator car and in/out of Bluetooth range when doors are opened and closed, it becomes very difficult to have the reader work properly within a wireless network.

US 2019/210837 A1 discloses an elevator system comprising a communication circuit configured for establishing a data connection between the elevator system and a remote service center.

US 2015/251875 A1 discloses a method for resetting a safety system of an elevator installation.

According to a first aspect, a method for connecting a first device that is configured for moving to a non-moving network is provided. The method comprises: transmitting data over a wired data line from the first device to a second device, wherein the second device is stationary; transmitting the data from the second device over a wireless network; receiving further data by the second device from the wireless network; and transmitting the further data from the second device to the first device; wherein: the first device is affixed to a lift in a hoistway of an architectural structure and the second device is fixed within the architectural structure so that the second device is stationary when the lift moves; and the method includes operating the lift based on the further data, wherein the wireless network is a mesh network and the method includes: the second device obtaining location data representing a current physical location of the first device or the lift, and the second device transmitting the location data to the first device; the first device transmitting the location data to a mobile device inside the lift over Bluetooth; and the mobile device: displaying the location data; displaying information relevant to a next floor the lift is traveling to; and/or prompting a passenger to take predetermined actions available on the next floor.

Optionally, the first device is a card reader.

Optionally, the data represents a maintenance request and/or a data audit request following the card reader reading a card, and the data further represents a maintenance update data and/or data responsive to the data audit request.

Optionally, the further data represents a firmware update for the card reader and operating the lift includes updating the firmware on the card reader.

Optionally, the further data represents data responsive to the audit request and operating the lift includes illuminating on a lift control panel an updated set of floors available to the lift.

Optionally, the lift is an elevator car.

Optionally, the wired data line is connected to an elevator rope in the hoistway.

Optionally, the second device is installed in an elevator control room.

According to a second aspect, a system is provided. The system comprises: a lift that is configured to move between levels in a hoistway of an architectural structure; a first device fixed to the lift; and a second device fixed within the architectural structure so that the second device is stationary when the lift moves, the first device and the second device are configured for bi-directional data communication over a wired data line, and the second device is configured as a transceiver to communicate over a wireless network within the architectural structure, wherein the system is configured to: receive further data by the second device from the wireless network; and transmit the further data from the second device to the first device; and operate the lift based on the further data, wherein the wireless network is a mesh network and: the second device is configured to: obtain location data representing a current physical location of the first device or the lift; and transmit the location data to the first device; the first device is configured to transmit the location data to a mobile device inside the lift over Bluetooth; and the mobile device is configured to: display the location data; display information relevant to a next floor the lift is traveling to; and/or prompt a passenger to take predetermined actions available on the next floor.

Optionally, the wired data line comprises a CAN bus.

Optionally, the architectural structure is a hotel.

The present disclosure is illustrated by way of example and not limited in the accompanying figures in which like reference numerals indicate similar elements.

Certain exemplary embodiments will now be described in greater detail by way of example only and with reference to the accompanying drawings in which:
FIG. 1 is a schematic illustration of an elevator system;
FIG. 2 is a schematic of a system configured with a proxy-transceiver for the elevator;
FIG. 3 is a flowchart showing a method of operating an elevator; and
FIG. 4 is a flowchart showing another method of operating an elevator.

Features of the disclosed embodiments will now be addressed with reference to the figures. Features in any one figure are equally applicable to any other figure unless otherwise indicated. Features illustrated in the figures are for purposes of supporting the disclosure and are not in any way intended to limit the scope of the disclosed embodiments. Any sequence of numbering in the figures is for reference purposes only.

This disclosure relates to an access control system with a movable reader and a non-movable reader that are connected via a wired interface. The movable is mounted in a people conveyer, i.e. a lift/elevator. According to disclosed embodiments, the non-movable reader may be mounted in a control room, for example. The non-movable reader has access to a wireless network where messages can be sent to/received from the wireless network and routed over the wired interface to the movable reader.

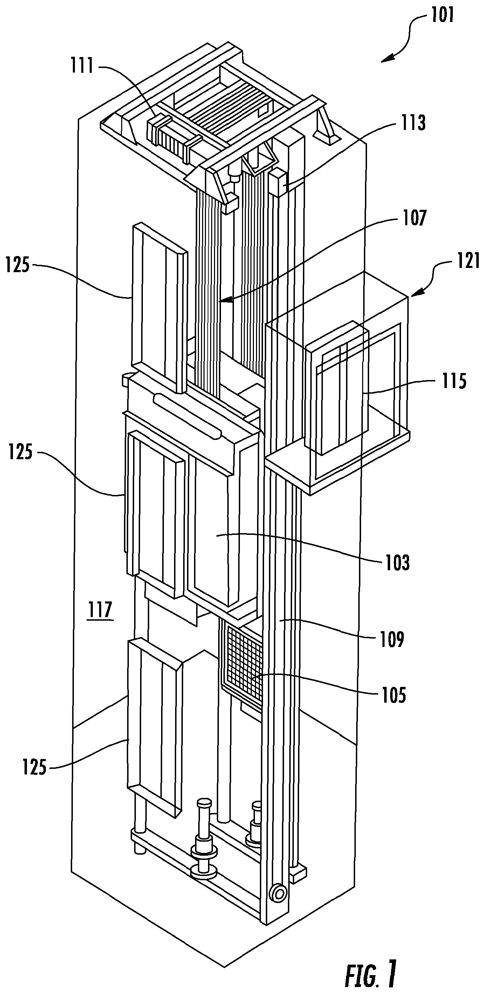

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within the elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

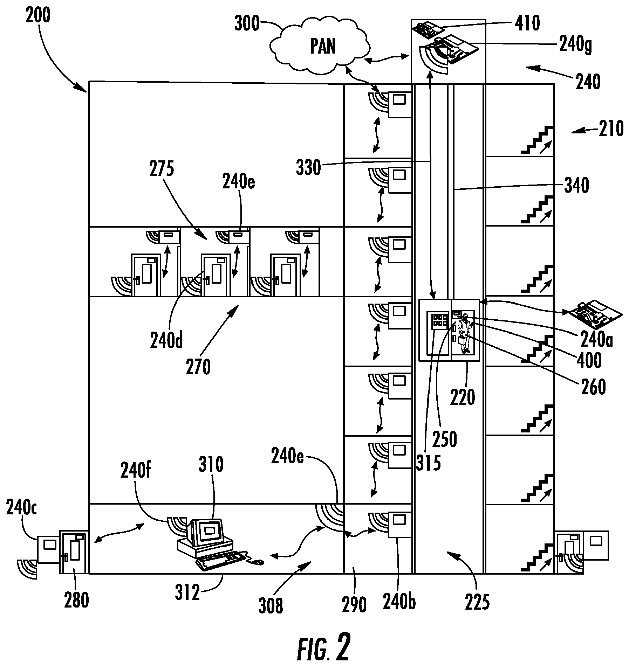

Turning to FIG. 2, an architectural structure such as a hotel 200 may be equipped with an elevator system (system) 210 (such as the elevator system 101 of FIG. 1). The system 210 includes an elevator car 220 (which may be referred to as a 'lift') movable in a hoistway 225. The system 210 also includes network communication nodes or network communication devices 240. Some of the network communication devices 240 may be configured as card readers to read an access card 250 of a guest 260 to determine whether the guest 260 has access rights to specific locations, such as a floor or level 270, and rooms or suites 275, in the hotel 200.

An elevator card reader 240a (a first device) is located within the elevator car 220. The elevator card reader 240a may be used to enable a guest 260 with an access card 250, while riding the elevator car 220, to request that the elevator car 220 stop at the level 270. A lobby card reader 240b in an elevator lobby 290 may enable the guest 260 to call the elevator car 220. An exterior door card reader 240c may be used by the guest 260 to obtain hotel access through an exterior door 280. A room door card reader 240d, such as integrated into a door handle, may be used by the guest 260 to obtain hotel access into the suite 275. A room thermostat 240e may be configured to control the experience of the suite 275 when the guest 260 enters the suite 275.

The network communication devices 240 communicate with one another over a wireless network 300. The wireless network 300 is a mesh network and specifically may be a Bluetooth mesh network, also known as a Bluetooth Mesh. To support the wireless network 300 an additional network communication device in the form of a network beacon 240e may be located within, for example, a corridor 308 of the hotel 200. By communicating with each other, the network communication devices 240 may relay or route messages through the network.

In general, the system is utilized to control the guest room utilizing the thermostat 240e is a room management system (RMS). Then, when a guest uses the card to open their room door with door lock 240d, the lock 240d may send a message to the RMS (via the thermostat 240e) to indicate the guest entered the room. The RMS may then turn on the lights, set the thermostat to a comfort level, etc. The door lock 240d may use the RMS (e.g., utilizing network communication capabilities of the thermostats) as the network 300. Messages sent to and from the thermostat 204e may be routed through the network 300 which then accesses an API on a front desk access control system (FDS) 310 to send or receive messages to an FDS server which may be on-site or accessed on-site by the FDS 310 utilizing typical telecommunication network protocols and access points. The FDS 310 may be on a first-level lobby 312. The FDS 310 may include another network communication device in the form of a built in or mountable transceiver 240f. The messages sent to and from the FDS system 310 to a network communication device 240 would be used to transfer audit records from a card 250 read by a device (for example 240a, 240b, 240c, 240d) to the FDS system, or to transfer a configuration change from the FDS 310 to the device 240.

Generally, there may be several communication protocols in which the elevator card reader 240a and elevator controller 350 may communicate with one another and not necessarily need to communicate with the FDS 310. In a first case, the reader may be configured to enable/disable certain buttons on a control panel 315 in the elevator car based on the floor permissions that the reader knows the guest (card) has based on the card encoding data. In a second case, the reader may be configured to communicate with the elevator controller what floors the guest is permitted (again based on the card data). In the first case, the card is read by the reader, and the reader makes the decision locally at the reader and then through an interface with the control panel it enables the buttons on the control panel 315 that they person can press. In the second case, the card is read by the reader and the reader sends a signal to the elevator controller. In either case the interface may be electronically controlled relay switches, a communication protocol, or any typical method of interfacing between electronic systems. For example, the communication protocol may be serial, USB, CAN-bus, I2C, Ethernet, or other typical communication protocols well known in the art.

In addition to communication between the reader 240a and the controller 350, the elevator car reader 240a may need to communicate with the FDS, e.g., by transmitting data over the network 300. For example, this occurs when the reader requires maintenance or the FDS needs to send a configuration change to the reader. For example, the reader may send a request for a data audit, accompanied by an audit record, to the FDS. In this case a message is sent from the reader to the FDS. The data is the audit record indicating that a guest accessed the reader. The message is sent to the proxy reader 240g and then routed on through the network 300 to the FDS. In another example the FDS may be requesting diagnostics from the reader 240a. That is, the message is sent to the reader 240a, from the FDS 310 with the requested data. This message is routed to the proxy reader 240g which then routes it down the wire to the reader 240a.

To facilitate a reliable communication over the network between the elevator car 220 and the FDS 310, a further network communication device which may be a proxy-transceiver (a second device) 240g is fixed within the hotel 200, for example in an elevator control room 320 located atop the hoistway 225. The proxy-transceiver 240g is stationary when the elevator car 220 moves. The proxy-transceiver 240g communicates with the other network communication devices 240, except the elevator card reader 240a, over the wireless network 300 using the appropriate protocols. The proxy-transceiver 240g can bi-directionally communicate with the elevator card reader 240a over a wired data line 330, which may be a wired connection configured as a CAN serial data bus or similar data bus. The wired data line 330 may be connected, e.g., affixed to, an elevator rope 340 that extends to the elevator control room 320. Thus, reliable communications between the elevator card reader 240a and the rest of the network communication devices 240 may be secured through the proxy-transceiver 240g. Such communications may be secured even while the elevator car 220 is moving. In certain embodiments the elevator card reader 240a may also be able to communicate with the rest of the network communication devices 240 over the wireless network 300 and then utilize the proxy-transceiver 240g as a backup communication path.

Data communicated over the wired data line 330 may be configured according to a wireless network protocol, such as that for mesh networks, e.g., Bluetooth Mesh networks. The data may include information representing an origin or source, a destination, and other typical data fields required to complete the transmission. This way, when the data is transmitted from the elevator card reader 240a and received by the proxy-transceiver 240g, the proxy-transceiver 240g may transmit the data over the wireless network 300 to the destination identified in the data.

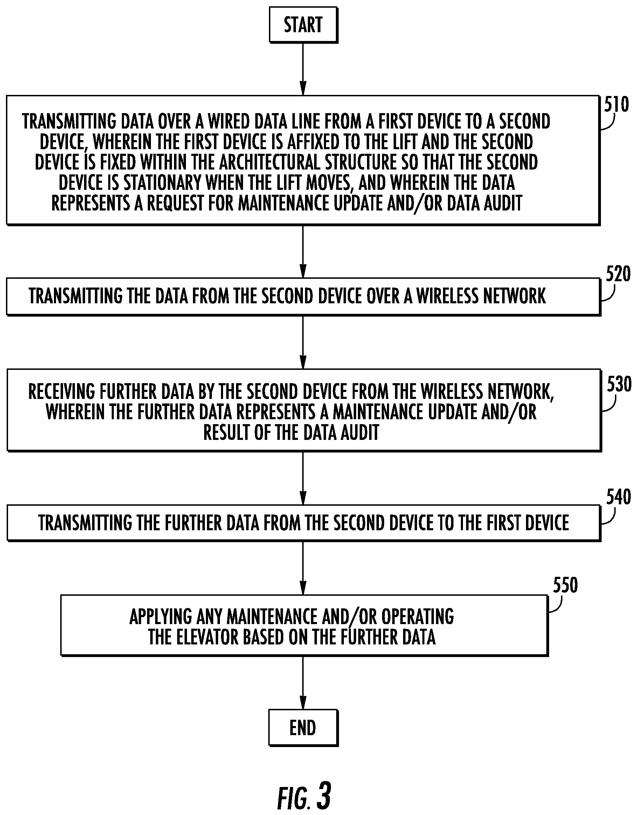

Turning to FIG. 3, a method is disclosed for operating the elevator car 220. As shown in block 510, the method includes transmitting data over the wired data line 330 from the first device 240a to the second device 240g. As indicated the first device 240a is affixed to the elevator car 220 and the second device 240g is fixed within the architectural structure 200. As indicated, the second device 240g is stationary when the elevator car 220 moves. As indicated the data represents a request for a maintenance update or a data audit 270. As shown in block 520 the method includes transmitting the data from the second device 240g over the wireless network 300. As shown in block 530 the method includes receiving further data by the second device 240g from the wireless network 300. As indicated the further data represents the maintenance update and/or results of the data audit. As shown in block 540 the method includes transmitting the further data from the second device 240g to the first device 240a. As shown in block 550 the method includes applying any received maintenance update and/or operating the elevator following the data audit based on the further data. For example, the firmware of the reader may be updated based on the maintenance update received in the further data. As used herein, maintenance data includes diagnostic information as well as firmware and software maintenance. Alternatively, the further data may indicate an updated set of floors available to the passenger using the card based on information updated at the FDS. Thus, the panel lighting configuration, identifying the updated set of floors available to the passenger, would be different following the data audit as compared with a circumstance in which the data audit not been requested. Thus, reliable communications between the first device 240a and the wireless network 300 may be secured through the second device 240g.

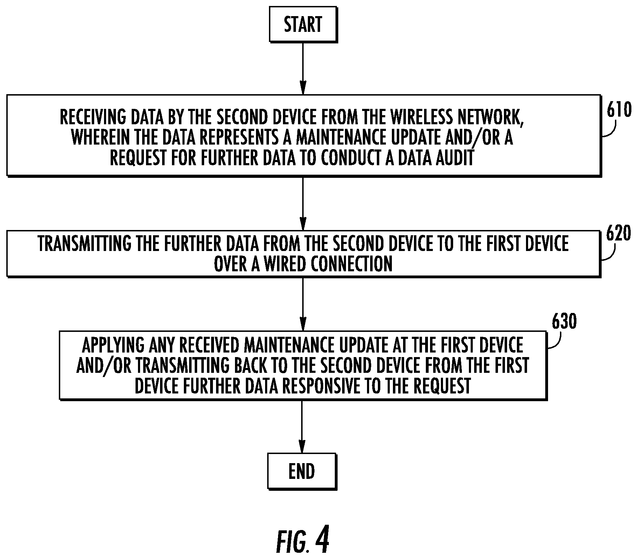

Turning to FIG. 4, a further method is disclosed for operating the elevator car 220. FIG. 3 described initiating a transmission from the elevator car to the FDS and FIG. 4 shows the reverse, i.e., processing a transmission that began with the FDS and is targeted for the elevator car. As shown in block 610 the method includes receiving data by the second device 240g from the wireless network 300. The data may represent a maintenance update and/or a request for further data to audit, e.g., from the FDS. As shown in block 620 the method includes transmitting the data from the second device 240g to the first device 240a over the wired connection. As shown in block 630 the method includes applying any received maintenance update at the first device and/or transmitting back to the second device from the first device further data responsive to the request.

A current physical location of the moving card reader (first device) 240a / lift (elevator car) 220 is shared as location data with a mobile device 400 located inside the lift (elevator car) 220 over a personal area network such as Bluetooth between the moving reader (first device) 240a and the mobile device 400. This may be by the non-movable reader (second device) 240g obtaining location data from the one or more other controllers 410 in the elevator control room 320, indicating a current position or floor of the elevator car 220. The location data is relayed to the moving reader (first device) 240a, which then broadcasts or sends the location data to the mobile device 400 inside of the lift (elevator car) 220. The mobile device 400, with this location data, displays the location data. Other relevant features may become enabled in the mobile device 400 for the next floor on which the lift (elevator car) 220 is landing. Such other relevant features include displaying a menu for a restaurant on the next floor or displaying a schedule for a pool or a gym or a sauna or other facility on the next floor. The mobile device 400 may provide prompts to take actions that may be performed on the next floor. Such actions may include room-checkout, reserve a table at a restaurant, etc., or displaying other general information.

The bus identified above may comprise a controller area network (CAN) based on the standards adopted by the International Standards Organization (ISO), such as 11898 (1993 CAN 2.0A), and thereafter extended 11898 (1995 CAN 2.0B), though such examples are not limiting. As used herein, a mesh network (or meshnet) is a local network topology in which the infrastructure nodes (i.e. bridges, switches, and other infrastructure devices) connect directly, dynamically and non-hierarchically to as many other nodes as possible and cooperate with one another to efficiently route data from/to clients. A Bluetooth Mesh is a computer mesh networking standard based on Bluetooth Low Energy that allows for many-to-many communication over Bluetooth radio, adopted by the Bluetooth Special Interest Group (Bluetooth SIG) on July 13, 2017.

As used herein, devices may contain one or more processors capable of communication with other such devices by applying wired and/or wireless telecommunication protocols. Non-limiting examples of a device include a mobile phone, personal data assistant (PDA), tablet, watch, wearable or other processor-based devices. An application executed by such devices may be identified as an "App", and may be available from an App Store, which is a digital distribution platform for distributing computer software applications over the Internet. Apps contain program level protocols enabling structured and logical communications between devices. Communication protocols applied by devices may include cellular, local area network (LAN) protocols and/or a private area network (PAN) protocols. LANs that apply Transport Control Protocol/Internet Protocol (TCP/IP protocol), for example, through a default gateway, may be interconnected over the Internet, and such systems that share computing resources over the Internet may be considered as computing over a Cloud. Locally, LAN protocols may apply Wi-Fi technology for communicating over Wi-Fi access points. Wi-Fi technology is a technology based on the Section 802.11 standards from the Institute of Electrical and Electronics Engineers, or IEEE. Technology applying PAN protocols may communicate over PAN beacons. PAN technology includes, for example, Bluetooth Low Energy (BTLE), which is a wireless technology standard designed and marketed by the Bluetooth Special Interest Group (SIG) for exchanging data over short distances using short-wavelength radio waves. PAN protocols may also include Zigbee, a technology based on Section 802.15.4 protocols from the Institute of Electrical and Electronics Engineers (IEEE).

More specifically, Zigbee represents a suite of high-level communication protocols used to create personal area networks with small, low-power digital radios for low-power low-bandwidth needs and is best suited for small scale projects using wireless connections. Wireless protocols may further include short range communication (SRC) protocols, which may be utilized with radio-frequency identification (RFID) technology. RFID may be used for communicating with an integrated chip (IC) on an RFID smartcard. Wireless protocols may further include long range, low powered wide area network (LoRa and LPWAN) protocols that enable low data rate communications to be made over long distances by sensors and actuators for machine-to-machine (M2M) and Internet of Things (IoT) applications.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Rather, the present invention can be modified to incorporate any number of variations, alterations, substitutions, combinations, sub-combinations, or equivalent arrangements not heretofore described, but which are commensurate with the scope of the present invention as defined by the appended claims. Additionally, while various embodiments of the present invention have been described, it is to be understood that aspects of the present invention may include only some of the described embodiments. Accordingly, the present invention is not to be seen as limited by the foregoing description, but is only limited by the scope of the appended claims.

## Claims

1. A method for connecting a first device (240a) that is configured for moving to a non-moving network, comprising:
transmitting data over a wired data line (330) from the first device to a second device (240g), wherein the second device is stationary;
transmitting the data from the second device over a wireless network (300);
receiving further data by the second device (240g) from the wireless network (300); and
transmitting the further data from the second device (240g) to the first device (240a);
wherein: the first device (240a) is affixed to a lift (220) in a hoistway (225) of an architectural structure (200) and the second device (240g) is fixed within the architectural structure so that the second device is stationary when the lift moves; and the method includes operating the lift based on the further data,
**characterized in that** the wireless network (300) is a mesh network and **in that** the method includes:
the second device (240g) obtaining location data representing a current physical location of the first device (240a) or the lift (220), and the second device transmitting the location data to the first device;
the first device (240a) transmitting the location data to a mobile device (400) inside the lift (220) over Bluetooth; and
the mobile device (400): displaying the location data; displaying information relevant to a next floor the lift (220) is traveling to; and/or prompting a passenger to take predetermined actions available on the next floor.

2. The method of claim 1, wherein the first device (240a) is a card reader.

3. The method of claim 2, wherein the data represents a maintenance request and/or a data audit request following the card reader (240a) reading a card, and the data further represents a maintenance update data and/or data responsive to the data audit request.

4. The method of claim 3, wherein the further data represents a firmware update for the card reader (240a) and operating the lift (220) includes updating the firmware on the card reader,

5. The method of claim 3 or 4, wherein the further data represents data responsive to the audit request and operating the lift includes illuminating on a lift control panel (315) an updated set of floors available to the lift.

6. The method of any of claims 1 to 5, wherein the lift (220) is an elevator car.

7. The method of claim 6, wherein: the wired data line (330) is connected to an elevator rope (340) in the hoistway (225).

8. The method of claim 6 or 7, wherein: the second device (240g) is installed in an elevator control room (320).

9. A system comprising:
a lift (220) that is configured to move between levels in a hoistway (225) of an architectural structure (200);
a first device (240a) fixed to the lift (220); and
a second device (240g) fixed within the architectural structure so that the second device is stationary when the lift moves,
the first device (240a) and the second device (240g) are configured for bi-directional data communication over a wired data line (330), and
the second device (240g) is configured as a transceiver to communicate over a wireless network (300) within the architectural structure,
wherein the system is configured to:
receive further data by the second device (240g) from the wireless network (300); and
transmit the further data from the second device (240g) to the first device (240a); and
operate the lift based on the further data,
**characterized in that** the wireless network (300) is a mesh network and **in that**:
the second device (240g) is configured to: obtain location data representing a current physical location of the first device (240a) or the lift (220); and transmit the location data to the first device;
the first device (240a) is configured to transmit the location data to a mobile device (400) inside the lift (220) over Bluetooth; and
the mobile device (400) is configured to: display the location data; display information relevant to a next floor the lift (220) is traveling to; and/or prompt a passenger to take predetermined actions available on the next floor.

10. The system of claim 9, wherein the first device (240a) is a card reader.

11. The system of claim 9 or 10, wherein the lift (220) is an elevator car.

12. The system of claim 11, wherein: the wired data line (330) is connected to an elevator rope (340) in the hoistway (225).

13. The system of claim 11 or 12, wherein: the system includes an elevator control room (320) in which the second device (240g) is installed.

14. The system of any of claim 9 to 13, wherein the wired data line (330) comprises a CAN bus.

15. The system of any of claims 9 to 14, wherein the architectural structure (200) is a hotel.

## Patentansprüche

1. Verfahren zum Verbinden einer ersten Vorrichtung (240a), die zum Schalten in ein sich nicht bewegendes Netzwerk ausgebildet ist, umfassend:
Übertragen von Daten über eine drahtgebundene Datenleitung (330) von der ersten Vorrichtung zu einer zweiten Vorrichtung (240g), wobei die zweite Vorrichtung stationär ist;
Übertragen der Daten von der zweiten Vorrichtung über ein drahtloses Netzwerk (300);
Empfangen weiterer Daten durch die zweite Vorrichtung (240g) aus dem drahtlosen Netzwerk (300); und
Übertragen der weiteren Daten von der zweiten Vorrichtung (240g) an die erste Vorrichtung (240a);
wobei: die erste Vorrichtung (240a) an einem Aufzug (220) in einer Aufzugsbahn (225) einer architektonischen Struktur (200) befestigt ist und die zweite Vorrichtung (240g) innerhalb der architektonischen Struktur so befestigt ist, dass die zweite Vorrichtung stationär ist, wenn sich der Aufzug bewegt; und das Verfahren den Betrieb des Aufzugs auf der Grundlage der weiteren Daten einschließt,
**dadurch gekennzeichnet, dass** das drahtlose Netzwerk (300) ein Mesh-Netzwerk ist und dass das Verfahren Folgendes einschließt:
die zweite Vorrichtung (240g), die Standortdaten erhält, die eine aktuelle physische Position der ersten Vorrichtung (240a) oder des Aufzugs (220) darstellen, und die zweite Vorrichtung, die die Standortdaten an die erste Vorrichtung überträgt;
die erste Vorrichtung (240a), die die Standortdaten über Bluetooth an eine mobile Vorrichtung (400) innerhalb des Aufzugs (220) überträgt; und
die mobile Vorrichtung (400): Anzeigen der Standortdaten; Anzeigen von Informationen, die für eine nächste Etage relevant sind, zu der der Aufzug (220) fährt; und/oder Auffordern eines Fahrgastes, vorbestimmte Maßnahmen zu ergreifen, die auf der nächsten Etage verfügbar sind.

2. Verfahren nach Anspruch 1, wobei die erste Vorrichtung (240a) ein Kartenleser ist.

3. Verfahren nach Anspruch 2, wobei die Daten eine Wartungsanfrage und/oder eine Datenprüfungsanfrage nach dem Lesen einer Karte durch den Kartenleser (240a) darstellen, und die Daten ferner Wartungsaktualisierungsdaten und/oder Daten als Reaktion auf die Datenprüfungsanfrage darstellen.

4. Verfahren nach Anspruch 3, wobei die weiteren Daten eine Firmware-Aktualisierung für den Kartenleser (240a) darstellen und der Betrieb des Aufzugs (220) das Aktualisieren der Firmware auf dem Kartenleser einschließt.

5. Verfahren nach Anspruch 3 oder 4, wobei die weiteren Daten Daten darstellen, die auf die Prüfungsanfrage reagieren, und der Betrieb des Aufzugs das Aufleuchten eines aktualisierten Satzes von Etagen, die für den Aufzug verfügbar sind, auf einem Aufzugsbedienfeld (315) einschließt.

6. Verfahren nach einem der Ansprüche 1 bis 5, wobei der Aufzug (220) ein Fahrstuhl ist.

7. Verfahren nach Anspruch 6, wobei die drahtgebundene Datenleitung (330) mit einem Aufzugsseil (340) in der Aufzugsbahn (225) verbunden ist.

8. Verfahren nach Anspruch 6 oder 7, wobei: die zweite Vorrichtung (240g) in einem Aufzugssteuerraum (320) installiert ist.

9. System, umfassend:
einen Aufzug (220), der zum Bewegen zwischen Ebenen in einer Aufzugsbahn (225) einer architektonischen Struktur (200) ausgebildet ist;
eine erste Vorrichtung (240a), die am Aufzug (220) befestigt ist; und
eine zweite Vorrichtung (240g), die innerhalb der architektonischen Struktur so befestigt ist, dass die zweite Vorrichtung stationär ist, wenn sich der Aufzug bewegt,
die erste Vorrichtung (240a) und die zweite Vorrichtung (240g) für eine bidirektionale Datenkommunikation über eine drahtgebundene Datenleitung (330) ausgebildet sind, und
die zweite Vorrichtung (240g) als Transceiver zur Kommunikation über ein drahtloses Netzwerk (300) innerhalb der architektonischen Struktur ausgebildet ist,
wobei das System zu Folgendem ausgebildet ist:
Empfangen weiterer Daten durch die zweite Vorrichtung (240g) aus dem drahtlosen Netzwerk (300); und
Übertragen der weiteren Daten von der zweiten Vorrichtung (240g) an die erste Vorrichtung (240a); und
Betreiben des Aufzugs auf der Grundlage der weiteren Daten,
**dadurch gekennzeichnet, dass** das drahtlose Netzwerk (300) ein Mesh-Netzwerk ist und dass:
die zweite Vorrichtung (240g) zu Folgendem ausgebildet ist: Abrufen von Standortdaten, die einen aktuellen physischen Standort der ersten Vorrichtung (240a) oder des Aufzugs (220) darstellen; und Übertragen der Standortdaten an die erste Vorrichtung;
die erste Vorrichtung (240a) so ausgebildet ist, dass sie die Standortdaten über Bluetooth an eine mobile Vorrichtung (400) innerhalb des Aufzugs (220) überträgt; und
die mobile Vorrichtung (400) zu Folgendem ausgebildet ist: Anzeigen der Standortdaten; Anzeigen von Informationen, die für eine nächste Etage relevant sind, zu der der Aufzug (220) fährt; und/oder Auffordern eines Fahrgastes, vorbestimmte Maßnahmen zu ergreifen, die auf der nächsten Etage verfügbar sind.

10. System nach Anspruch 9, wobei die erste Vorrichtung (240a) ein Kartenleser ist.

11. System nach Anspruch 9 oder 10, wobei der Aufzug (220) ein Fahrstuhl ist.

12. System nach Anspruch 11, wobei: die drahtgebundene Datenleitung (330) mit einem Aufzugsseil (340) in der Aufzugsbahn (225) verbunden ist.

13. System nach Anspruch 11 oder 12, wobei: das System einen Aufzugssteuerraum (320) einschließt, in dem die zweite Vorrichtung (240 g) installiert ist.

14. System nach einem der Ansprüche 9 bis 13, wobei die drahtgebundene Datenleitung (330) einen CAN-Bus umfasst.

15. System nach einem der Ansprüche 9 bis 14, wobei die architektonische Struktur (200) ein Hotel ist.

## Revendications

1. Procédé de connexion d'un premier dispositif (240a) qui est configuré pour se déplacer jusqu'à un réseau non mobile, comprenant :
l'émission de données sur une ligne de données filaire (330) du premier dispositif vers un deuxième dispositif (240g), dans lequel le deuxième dispositif est stationnaire ;
l'émission des données à partir du deuxième dispositif sur un réseau sans fil (300) ;
la réception de données supplémentaires par le deuxième dispositif (240g) en provenance du réseau sans fil (300) ; et
l'émission des données supplémentaires du deuxième dispositif (240g) au premier dispositif (240a) ;
dans lequel : le premier dispositif (240a) est fixé à un ascenseur (220) dans une gaine (225) d'une structure architecturale (200) et le deuxième dispositif (240g) est fixé au sein de la structure architecturale de sorte que le deuxième dispositif soit stationnaire lorsque l'ascenseur se déplace ; et le procédé inclut l'exploitation de l'ascenseur sur la base des données supplémentaires,
**caractérisé en ce que** le réseau sans fil (300) est un réseau maillé et **en ce que** le procédé inclut les étapes suivantes :
le deuxième dispositif (240g) obtient des données de localisation représentant une localisation physique actuelle du premier dispositif (240a) ou de l'ascenseur (220), et le deuxième dispositif émet les données de localisation vers le premier dispositif ;
le premier dispositif (240a) émet les données de localisation vers un dispositif mobile (400) à l'intérieur de l'ascenseur (220) par Bluetooth ; et
le dispositif mobile (400) : affiche les données de localisation ; affiche des informations concernant un étage suivant vers lequel l'ascenseur (220) se déplace ; et/ou invite un passager à réaliser des actions prédéterminées disponibles à l'étage suivant.

2. Procédé selon la revendication 1, dans lequel le premier dispositif (240a) est un lecteur de cartes.

3. Procédé selon la revendication 2, dans lequel les données représentent une requête de maintenance et/ou une requête d'audit de données à la suite de la lecture d'une carte par le lecteur de cartes (240a), et les données représentent en outre des données de mise à jour de maintenance et/ou des données répondant à la requête d'audit de données.

4. Procédé selon la revendication 3, dans lequel les données supplémentaires représentent une mise à jour de micrologiciel pour le lecteur de cartes (240a) et l'exploitation de l'ascenseur (220) inclut la mise à jour du micrologiciel sur le lecteur de carte.

5. Procédé selon la revendication 3 ou la revendication 4, dans lequel les données supplémentaires représentent des données répondant à la requête d'audit et l'exploitation de l'ascenseur inclut l'éclairage sur un panneau (315) de commande d'ascenseur d'un ensemble mis à jour d'étages disponibles pour l'ascenseur.

6. Procédé selon l'une quelconque des revendications 1 à 5, dans lequel l'ascenseur (220) est une cabine d'ascenseur.

7. Procédé selon la revendication 6, dans lequel la ligne de données filaire (330) est connectée à un câble d'ascenseur (340) dans la gaine (225).

8. Procédé selon la revendication 6 ou la revendication 7, dans lequel : le deuxième dispositif (240g) est installé dans un local (320) de commande d'ascenseur.

9. Système comprenant :
un ascenseur (220) qui est configuré pour se déplacer entre des niveaux dans une gaine (225) d'une structure architecturale (200) ;
un premier dispositif (240a) fixé à l'ascenseur (220) ; et
un deuxième dispositif (240g) fixé au sein de la structure architecturale de sorte que le deuxième dispositif soit stationnaire lorsque l'ascenseur se déplace,
le premier dispositif (240a) et le deuxième dispositif (240g) sont configurés pour une communication de données bidirectionnelle sur une ligne de données filaire (330), et
le deuxième dispositif (240g) est configuré sous la forme d'un émetteur-récepteur pour communiquer sur un réseau sans fil (300) au sein de la structure architecturale,
dans lequel le système est configuré pour :
recevoir des données supplémentaires par le deuxième dispositif (240g) en provenance du réseau sans fil (300) ; et
émettre les données supplémentaires du deuxième dispositif (240g) au premier dispositif (240a) ; et
exploiter l'ascenseur sur la base des données supplémentaires,
**caractérisé en ce que** le réseau sans fil (300) est un réseau maillé et **en ce que** :
le deuxième dispositif (240g) est configuré pour : obtenir des données de localisation représentant une localisation physique actuelle du premier dispositif (240a) ou de l'ascenseur (220) ; et émettre les données de localisation vers le premier dispositif ;
le premier dispositif (240a) est configuré pour émettre les données de localisation vers un dispositif mobile (400) à l'intérieur de l'ascenseur (220) par Bluetooth ; et
le dispositif mobile (400) est configuré pour : afficher les données de localisation ; afficher des informations concernant un étage suivant vers lequel l'ascenseur (220) se déplace ; et/ou inviter un passager à réaliser des actions prédéterminées disponibles à l'étage suivant.

10. Système selon la revendication 9, dans lequel le premier dispositif (240a) est un lecteur de cartes.

11. Système selon la revendication 9 ou la revendication 10, dans lequel l'ascenseur (220) est une cabine d'ascenseur.

12. Système selon la revendication 11, dans lequel : la ligne de données filaire (330) est connectée à un câble d'ascenseur (340) dans la gaine (225).

13. Système selon la revendication 11 ou la revendication 12, dans lequel : le système inclut un local (320) de commande d'ascenseur dans lequel le deuxième dispositif (240g) est installé.

14. Système selon l'une quelconque des revendications 9 à 13, dans lequel la ligne de données filaire (330) comprend un bus CAN.

15. Système selon l'une quelconque des revendications 9 à 14, dans lequel la structure architecturale (200) est un hôtel.
